# EUROPEAN PATENT APPLICATION

(11) **EP 4 629 050 A1**
(43) Date of publication of application: **08.10.2025**
(21) Application number: 25158760.6
(22) Date of filing: 19.02.2025
(51) Int. Cl.: G06F 3/12, G06T 7/00

(54) **IMAGE INSPECTION APPARATUS, IMAGE INSPECTION METHOD, AND IMAGE INSPECTION PROGRAM**

(30) Priority: 05.04.2024 JP 2024061201
(71) Applicant: KONICA MINOLTA, INC., Tokyo 100-7015 (JP)
(72) Inventor: TSUKAMOTO, Yasumasa, Chiyoda-ku, Tokyo, 100-7015 (JP)
(74) Representative: Hoffmann Eitle

(57) **Abstract**

To provide an image inspection apparatus, an image inspection method, and an image inspection program with which it is possible to detect an image defect not only in a non-variable region but also in a variable region.

An image inspection apparatus 300 includes an image former 330, a reference image generator 380, and an image inspector 350. The image former 330 forms an image on a recording medium based on image data. The reference image generator 380 generates, based on the image data, a reference image to be used for inspection of the image formed on the recording medium. The image inspector 350 inspects the image formed on the recording medium based on the reference image. The reference image generator 380 generates a reference image to be compared to a read image that is to be inspected by the image inspector 350 for an image of a page including a non-variable region in which the same image is formed in a plurality of pages by the image former 330 and a variable region in which different images are formed for each page.

## Description

### Background of the Invention

### 1. Technical Field

The present invention relates to an image inspection apparatus, an image inspection method, and an image inspection program.

### 2. Description of Related art

Conventionally, variable printing has been known in which a document image including a variable region and a non-variable region is printed in a case where, for example, direct mail having the same content is sent to a large number of addresses. The variable region is a region where an image changes (differs) for each page, such as an address in a document image, and the non-variable region is a region where images are the same in all pages, such as content of a document image.

However, in direct mail or the like to be sent to a large number of addresses, it is necessary to inspect the quality of a large amount of printed printing sheets (printed products) before dispatch. The inspection requires registration of a reference image in advance. In order to inspect the variable region having different images for each page, reference images of all pages need to be registered in advance, which takes much time and effort. For example, Japanese Unexamined Patent Application Publication No. 2016-146514 discloses registering, as a reference image, a read image of a printed product which is inspected by a user and which is determined to have no abnormality among several printed products having inspection images printed thereon. In a case where only one copy of a printed product having the same contents is generated like direct mail, it is not realistic to register reference images of all pages in advance. Conventionally, in order to shorten the time required for inspection, a non-variable region is set as an inspection region, a variable region is set as an inspection exclusion region, and only the non-variable region in a printed product is inspected without inspecting the variable region of the printed product.

### Summary of the Invention

However, in a case where images in the variable region of the printed product are not inspected, there is a problem that an image defect such as stains in the variable region cannot be detected.

The present invention has been made in view of the above-mentioned circumstances. An object of the present invention is to provide an image inspection apparatus, an image inspection method, and an image inspection program with which it is possible to detect an image defect not only in a non-variable region but also in a variable region.

The above object of the present invention is achieved by the following means.

To achieve at least one of the abovementioned objects, according to an aspect of the present invention, an image inspection apparatus reflecting one aspect of the present invention comprises the followings.
(1) An image inspection apparatus including: an image former that forms an image on a recording medium based on image data; a reference image generator that generates, based on the image data, a reference image to be used for inspection of the image formed on the recording medium; and an image inspector that performs inspection of the image formed on the recording medium based on the reference image, in which the reference image generator generates a reference image to be compared to a read image that is to be inspected by the image inspector for an image of a page including a non-variable region in which same image is formed in a plurality of pages by the image former and a variable region in which different images are formed for each page.
(2) The image inspection apparatus according to (1), in which the reference image generator generates the reference image for each page.
(3) The image inspection apparatus according to (1) or (2), in which the image inspector performs the same type of inspection for the variable region and the non-variable region included in the image.
(4) The image inspection apparatus according to (1) or (2), further including a controller that controls execution of a first inspection mode in which the image inspector performs the inspection for the variable region and execution of a second inspection mode in which the image inspector does not perform the inspection for the variable region, in which the controller causes the reference image generator to generate the reference image for an image in the non-variable region, causes the reference image generator to generate the reference image for an image in the variable region when the first inspection mode is executed, and causes the reference image generator not to generate the reference image for an image in the variable region when the second inspection mode is executed.
(5) The image inspection apparatus according to (1) or (2), further including a collator that performs collation by comparing information formed as an image and information obtained from a read image for the variable region, in which the inspection by the image inspector and the collation by the collator are performed for the variable region.
(6) The image inspection apparatus according to (5), in which, for the variable region, an inspection process by the image inspector and a collation process by the collator are performed in parallel.
(7) The image inspection apparatus according to (1) or (2), further including a controller that performs, in parallel, a reference image generation process including generating the reference image by the reference image generator, and an inspection process including forming the image on the recording medium by the image former and inspecting, by the image inspector, a read image generated by reading the recording medium on which the image has been formed.
(8) An image inspection method including: a step (a) of forming an image on a recording medium based on image data; a step (b) of generating, based on the image data, a reference image to be used for inspection of the image formed on the recording medium; and a step (c) of inspecting the image formed on the recording medium based on the reference image, in which the step (b) includes generating a reference image to be compared to a read image that is to be inspected in the step (c) for an image of a page including a non-variable region in which same image is formed in a plurality of pages in the step (a) and a variable region in which different images are formed for each page.
(9) An image inspection program for causing a computer to execute processing including: a procedure (a) of forming an image on a recording medium based on image data; a procedure (b) of generating, based on the image data, a reference image to be used for inspection of the image formed on the recording medium; and a procedure (c) of inspecting the image formed on the recording medium based on the reference image, in which the procedure (b) includes generating a reference image to be compared to a read image that is to be inspected in the procedure (c) for an image of a page including a non-variable region in which same image is formed in a plurality of pages in the procedure (a) and a variable region in which different images are formed for each page.

According to the present invention, a reference image to be compared with the read image to be inspected is generated for an image of the page including the variable region and the non-variable region, whereby it is possible to inspect not only the non-variable region but also the variable region. Therefore, an image defect can be detected not only in the non-variable region but also in the variable region.

### Brief Description of the Drawings

The advantages and features provided by one or more embodiments of the invention will become more fully understood from the detailed description given hereinbelow and the appended drawings which are given by way of illustration only, and thus are not intended as a definition of the limits of the present invention:
Fig. 1 is a schematic block diagram of a printing system according to an embodiment of the present invention;
Fig. 2 is a schematic block diagram illustrating the configuration of an image forming system illustrated in Fig. 1;
Fig. 3 is a schematic diagram illustrating a document image including a variable region and a non-variable region;
Fig. 4 is a schematic diagram illustrating a read image including a barcode image in a variable region;
Fig. 5 is a block diagram for describing the outline of a control operation of a controller and a print controller illustrated in Fig. 2;
Fig. 6 is a flowchart illustrating a processing procedure of an image inspection method performed by the image forming system illustrated in Fig. 1;
Fig. 7 is a schematic diagram illustrating, in a time-series manner, processing of acquiring a document image, processing of generating a reference image, processing of forming an inspection image, processing of inspecting the inspection image, and processing of collating the inspection image;
Fig. 8 is a schematic diagram illustrating printing of a plurality of copies of a document image in a time series manner; and
Fig. 9 is a subroutine flowchart illustrating processing (step S103) of generating the reference image in the flowchart illustrated in Fig. 6.

### Detailed Description

Hereinafter, one or more embodiments of the present invention will be described with reference to the drawings. However, the scope of the invention is not limited to the disclosed embodiments. Note that in the description of the drawings, the same components are denoted by the same reference signs, and redundant descriptions are omitted. In addition, dimensional ratios in the drawings are exaggerated for convenience of description and may be different from actual ratios.

### (Embodiment)

### <Configuration of printing system>

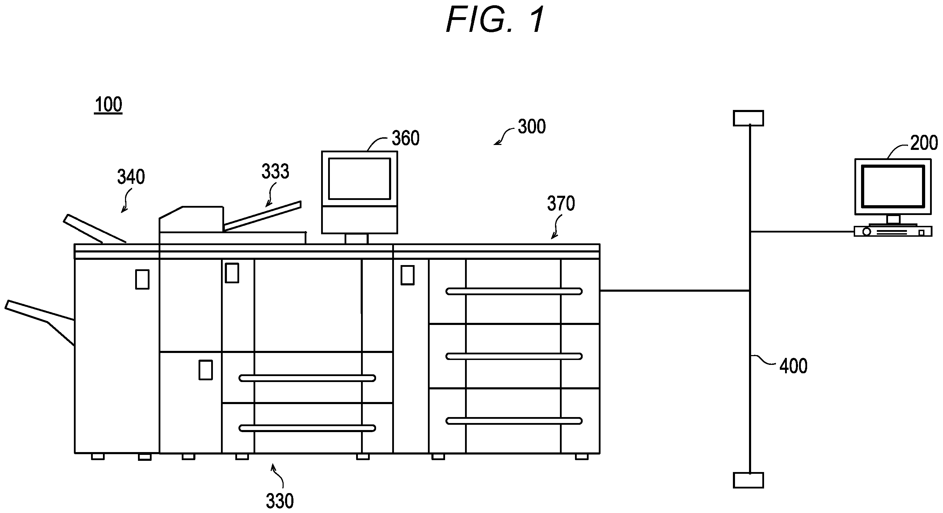

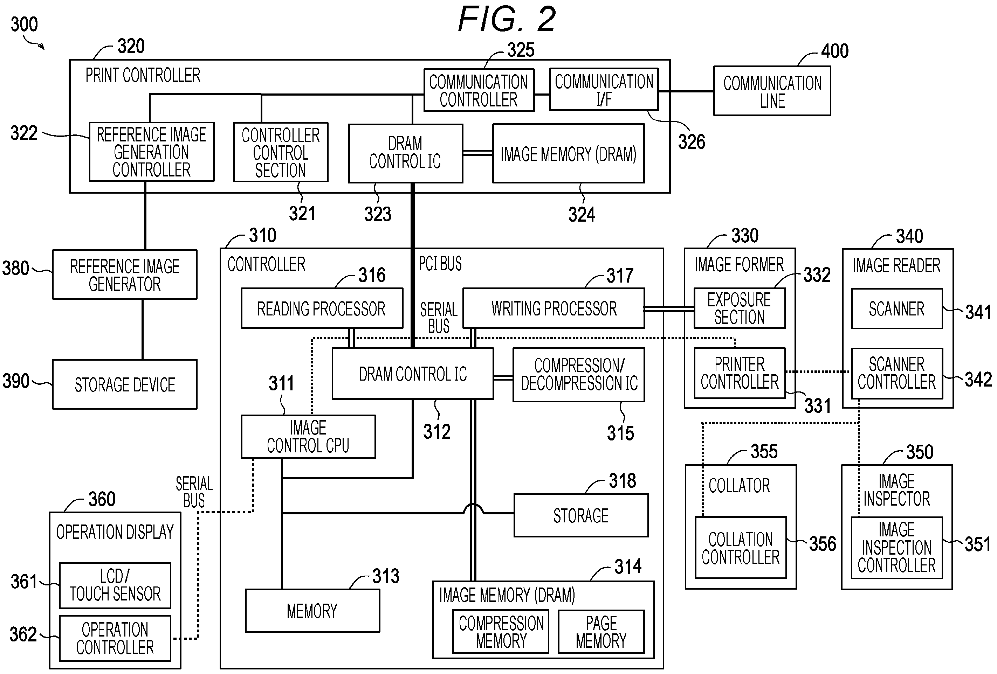

Fig. 1 is a schematic block diagram of a printing system according to an embodiment of the present invention, and Fig. 2 is a schematic block diagram illustrating the configuration of an image forming system illustrated in Fig. 1.

As illustrated in Fig. 1, a printing system 100 includes a client terminal 200 and an image forming system 300. The client terminal 200 and the image forming system 300 are communicably connected to each other via a communication line 400.

The client terminal 200 may be, for example, a personal computer, a tablet terminal, a smartphone, or the like. A printer driver for converting document data into a print job is installed in the client terminal 200. The printer driver generates a print job in a format compatible with a print controller 320 (see Fig. 2) of the image forming system 300, and transmits the print job to the image forming system 300 via the communication line 400. The client terminal 200 includes a display, and can display a result (indicating a non-defective product or a defective product) of inspecting a printed product, an image of a defective printed product, and the like.

The print job includes, for example, print data in a page description language (PDL) format and job information. In the present embodiment, the print job can include a variable print job for executing variable printing. The variable printing refers to printing in which the print content on each sheet can be partially replaced as necessary. The print data includes, for example, one or more pieces of data each of which includes first to n-th pages. The job information includes, for example, print settings such as the number of pages, the number of copies, the type, size, and basis weight of a sheet (recording medium), single-sided printing/double-sided printing, variable printing information, an inspection mode, inspection setting (on/off), collation setting (on/off), and information regarding an inspection exclusion region. The variable printing information includes information regarding whether or not the variable printing is to be performed, the positions of a variable region and a non-variable region, and the like. A user can instruct the image forming system 300 to perform image inspection by setting the inspection setting on. In addition, the user can instruct the image forming system 300 to perform collation by setting the collation setting on. The information regarding the inspection exclusion region is information regarding designation of an inspection region to be inspected by an image inspector 350 and/or designation of an inspection exclusion region not to be inspected.

The communication line 400 may include a local area network (LAN) in which computers and network devices are connected to each other according to a predetermined standard, a wide area network (WAN) in which LANs are connected to each other by a dedicated line, or the like. The predetermined standard is, for example, Ethernet (registered trademark), fiber distributed data interface (FDDI), wireless fidelity (Wi-Fi), or the like.

Note that the number of the above constituent elements connected to the communication line 400 is not limited to the number illustrated in Fig. 1.

### <Inspection mode>

The image forming system 300 in the present embodiment has an inspection mode including a first inspection mode and a second inspection mode. In the first inspection mode, reference images for the variable region and the non-variable region are generated, so that the variable region is also inspected in addition to the non-variable region. More specifically, when a plurality of copies is printed, reference images are generated for all the pages in all the copies, and thus, both the variable region and the non-variable region can be inspected. In the second inspection mode, the non-variable region is set as an inspection region and the variable region is set as an inspection exclusion region by the user. Thus, the non-variable region is inspected, but the variable region is not inspected. In the present embodiment, the document image includes images of a plurality of pages, and each page can include a variable region and a non-variable region. The variable region is, for example, a region where an image changes (differs) for each page, such as an address in direct mail or the like, and the non-variable region is a region where images are the same in all pages, such as content in a document image.

In the present embodiment, the inspection mode can be set to the first inspection mode by default. The user can appropriately change the inspection mode as necessary. The first inspection mode is suitable for a print job including variable printing. In a case where the first inspection mode is executed, a reference image is generated for an image in the variable region. On the other hand, in a case where the second inspection mode is executed, no reference image is generated for an image in the variable region. Regardless of the inspection mode, the reference image is generated for the non-variable region. The information regarding the inspection mode is stored in a controller 310 of the image forming system 300 described below.

### <Configuration of image forming system 300>

As illustrated in Figs. 1 and 2, the image forming system 300 includes the controller 310, a print controller 320, an image former 330, an image reader 340, the image inspector 350, a collator 355, an operation display 360, a sheet feeder 370, a reference image generator 380, and a storage device 390. The image forming system 300 functions as an image inspection apparatus.

### <Configuration of controller 310>

The controller 310 includes an image control central processing unit (CPU) 311, a dynamic random access memory (DRAM) control IC 312, a memory 313, an image memory (DRAM) 314, a compression/decompression IC 315, a reading processor 316, a writing processor 317, a storage 318, and the like.

The image control CPU 311 develops various programs stored in the storage 318 in the memory 313, and comprehensively controls the operation of the entire image forming system 300 in cooperation with the developed programs.

The reading processor 316 performs various kinds of processing such as analog processing, A/D conversion processing, and shading processing on an analog image signal output from a scanner 341 of the image reader 340, and generates digital image (read image) data. The generated digital image data is output to the compression/decompression IC 315 by the DRAM control IC 312. Under the control of the DRAM control IC 312, the compression/decompression IC 315 performs compression processing on digital image data and decompression processing on the digital image data that has been subjected to the compression processing. Furthermore, the DRAM control IC 312 controls input and output of the digital image data subjected to the compression and decompression processing to and from the image memory (DRAM) 314.

The image memory 314 is formed of a DRAM, includes regions of a compression memory and a page memory therein, and temporarily stores compressed image data, decompressed image data, and the like.

The writing processor 317 outputs the decompressed digital image data to an exposure section 332 of the image former 330.

### <Configuration of print controller 320>

The print controller 320 analyzes the print job received from the client terminal 200 via the communication line 400, performs processing such as color conversion, screening, and rasterization, and generates a document image in a bitmap format. The generated document image is transmitted to the controller 310. The print controller 320 functions as a document image acquirer.

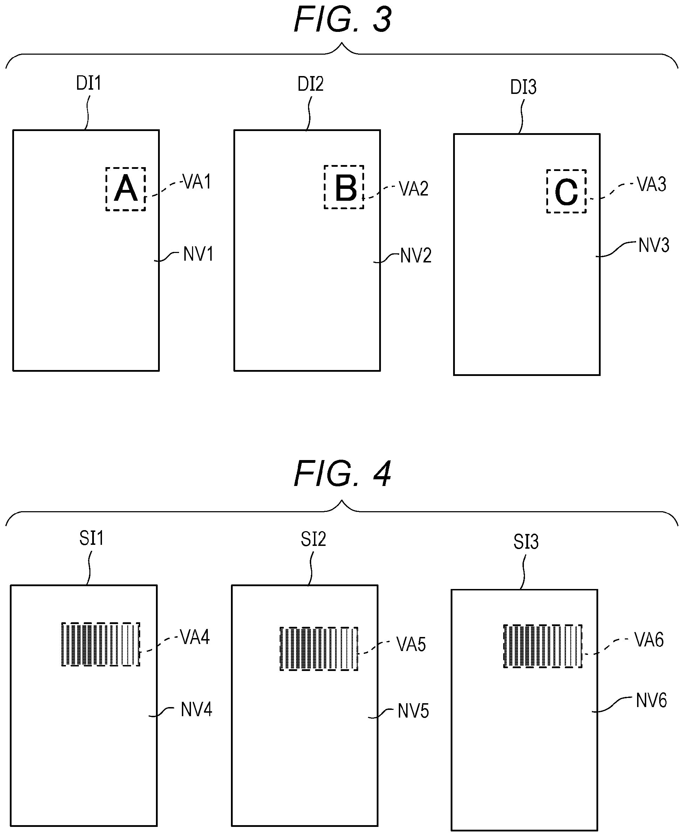

Fig. 3 is a schematic diagram illustrating a document image including a variable region and a non-variable region; The document image in Fig. 3 includes images (DI1 to DI3) of a plurality of copies (three copies) each including, for example, one page, and the pages of the copies respectively include variable regions (VA1 to VA3) and non-variable regions (NV1 to NV3). The images ("A", "B", and "C") in the variable regions of the document image are different for each copy. On the other hand, the images in the regions excluding the variable regions of the document image, that is, in the non-variable regions (NV1 to NV3), are the same (common) among the copies of the document image. For example, in a case where three copies of a 10-page document are printed, the image in the non-variable region of the first page is common in the three copies. On the other hand, the non-variable regions of pages 1 to 10 have different images from each other in many cases. That is, in the same pages (e.g., first pages) of the respective copies of the document image, the images in the non-variable regions are the same, and the images in the variable regions are different from each other for each copy.

Note that, in a case where each copy includes a plurality of pages, all the pages may include variable regions, or only some of the pages may include variable regions. For example, only the first page (cover sheet) of each copy includes a variable region, and the second and subsequent pages include only a non-variable region without including a variable region.

The print controller 320 includes a controller control section 321, a reference image generation controller 322, a DRAM control IC 323, an image memory (DRAM) 324, a communication controller 325, and a communication interface (I/F) 326. The controller control section 321 comprehensively controls operation of each section of the print controller 320. Further, the controller control section 321 receives the print job from the client terminal 200 or the like via the communication I/F 326. The communication controller 325 controls the communication I/F 326.

The received print job includes print data serving as a source of a document image and job information in which print settings such as the type of a sheet to be used are described. The print data is mainly in a PDL format. The print controller 320 performs rasterization (RIP) processing for converting print data into bitmap data in units of pages based on the print settings. The RIP image that has been subjected to the rasterization processing is temporarily stored in the image memory 324. The RIP image in the image memory 324 is temporarily stored in a compression memory region in the image memory 314 via the compression/decompression IC 315 under the control of the DRAM control IC 323 of the print controller 320 and the DRAM control IC 312 of the controller 310. At the time of normal printing, the RIP image stored in the compression memory region is decompressed by the compression/decompression IC 315 and is transmitted to the image former 330 as a document image (image data) via the writing processor 317, and the transmitted RIP image is printed.

The reference image generation controller 322 outputs, at a predetermined generation timing, a reference image generation instruction to generate a reference image to the reference image generator 380, which will be described later, such that the reference image generator 380 generates a reference image based on the document image. The predetermined generation timing can be, for example, a timing when the inspection setting is on and the document image acquirer acquires the document image. The reference image generator 380 generates the reference image based on the reference image generation instruction.

Ideally, a read image generated by reading an inspection image formed on a sheet is considered to match the document image in terms of content. However, when the inspection image formed on the sheet is read by the scanner, an error may occur in the read image with respect to the document image due to various factors such as variations in a conveyance path for the sheet, a reading position shift by the scanner, color reproducibility, and a difference in paper type. An error may also occur in the document image depending on the resolution of reading by the scanner. Therefore, when the read image and the document image are simply compared, an error is highly likely to occur, and it is not realistic to inspect the inspection image by simply comparing the read image with the document image. In view of this, the present embodiment is configured to generate a reference image by performing various kinds of processing on the document image in terms of position, resolution, color, and the like so that the reference image can be compared with the read image, and to compare the reference image and the read image. Thus, the reference image can be appropriately compared with the read image, whereby the printed product can be accurately inspected. Details of the processing of generating the reference image will be described later. Although Fig. 2 illustrates the case where the reference image generation controller 322 is provided in the print controller 320, the reference image generation controller 322 may be provided in the controller 310.

### <Configuration of image former 330>

The image former 330 forms (prints) an image on a sheet with an electrophotographic method including processes of charging, exposure, development, transfer, and fixing, in accordance with an instruction from the controller 310. In the present embodiment, the image former 330 forms an inspection image to be inspected by the image inspector 350 on a sheet under an image forming condition set based on the print settings. In a case where the inspection image is formed by variable printing, the image formed on the sheet can include a non-variable region in which the same image is formed in a plurality of pages and a variable region in which a different image is formed for each page.

The image former 330 includes a printer controller 331, the exposure section 332, and the like. The printer controller 331 is connected to the image control CPU 311 by serial communications, and receives control by the image control CPU 311. The printer controller 331 drives a laser diode (LD) of the exposure section 332 in response to a signal from the writing processor 317, and forms an electrostatic latent image corresponding to a document image on a photoreceptor (not illustrated). The toner image formed on the photoreceptor is developed through a development process and is transferred onto a sheet supplied from the sheet feeder 370. Next, the unfixed toner image on the sheet is fixed by being heated and pressurized. The sheet on which the toner image has been fixed is conveyed to the image reader 340.

In addition, the image former 330 includes a printing sheet ejection device that ejects (purges) a sheet (waste sheet) having an inspection image that has been detected as abnormal by the image inspector 350 separately from a sheet on which a normal inspection image has been formed.

### <Configuration of image reader 340>

The image reader 340 includes the scanner 341 and a scanner controller 342. The scanner 341 reads a sheet (printed product) conveyed through a conveyance path with, for example, a charge coupled device (CCD) image sensor. The scanner controller 342 controls the scanner so that the scanner reads an inspection image formed on the sheet conveyed from the image former 330 according to a reading instruction from the controller 310. The scanner controller 342 outputs, to the controller 310, a read image obtained by reading the inspection image formed on the sheet.

### <Configuration of image inspector 350>

The image inspector 350 inspects an image based on a reference image. The image inspector 350 includes an image inspection controller 351. The image inspection controller 351 includes a CPU, a RAM, a ROM, and an auxiliary storage device (not illustrated). The function of inspecting an inspection image is implemented by the CPU executing an image inspection program.

In the present embodiment, the image inspection controller 351 acquires information regarding the inspection mode from the controller 310 and inspects the inspection image in accordance with the inspection mode. When the inspection mode is the first inspection mode, the image inspection controller 351 generates reference images of all the pages including variable regions, so that the user does not need to set, as the inspection exclusion regions, the variable regions having different contents for each page. Therefore, the variable region and the non-variable region are set as the inspection regions, and thus, the inspection image is inspected for the entire region of the page including the variable region. On the other hand, when the inspection mode is the second inspection mode, the non-variable region is set as the inspection region and the variable region is set as the inspection exclusion region by the user in the image inspection controller 351. Thus, the inspection image in the variable region in the page is not inspected. The image inspection controller 351 inspects the inspection image for a region not including the variable region in the page, that is, a non-variable region, regardless of which one of the first and second inspection modes is selected.

The image inspector 350 acquires the reference image, the read image, and the variable printing information, and compares the reference image with the read image page by page for each of the variable region and the non-variable region to inspect the inspection image formed on the sheet. In the first inspection mode in the present embodiment, the same type of inspection as the inspection performed for the non-variable region is performed for the variable region. The image defect detected by the inspection can be, for example, a stripe-like defect (streak) or a spot-like defect (white spot). A streak is a defect caused by, for example, a scratch or a stain on a member such as a drum or a roller of an image forming apparatus, a reading surface of a scanner, or the like, and can appear as a gradation difference or density unevenness of a pixel value which is not included in an original image. Examples of the streak include a white streak that is lighter than an original image and a black streak that is darker than the original image. The white spot is a spot-like image defect that is not included in the original image data, and the white spot appearing particularly in a printed product of a halftone image is likely to be noticed by a user who views the printed product.

As a relatively simple method for detecting an image defect, for example, the image inspection controller 351 calculates a difference (error) in pixel value between the reference image and the read image for each page, and determines the quality of the inspection image according to the magnitude of the difference. The difference can be calculated for each page, each object, or each region. For example, in a case where the difference is calculated for each page, an inspection result indicating "non-defective" is output when the total value of differences between pixels in one page is less than a specified value, and an inspection result indicating "defective" is output when the total value of the differences between the pixels in one page is equal to or more than the specified value. In addition, when the difference is calculated for each object or for each region, an inspection result indicating "non-defective" or "defective" is output according to the total value of differences between pixel values in the selected object or region.

When the result of inspecting the inspection image indicates "non-defective", the controller 310 determines that the printed product is a non-defective product. When the result of inspecting the inspection image indicates "defective", the controller 310 determines that the printed product is a defective product.

### <Configuration of collator 355>

Fig. 4 is a schematic diagram illustrating a read image including a barcode image in a variable region; The collator 355 collates the inspection image based on information included in the variable region of the read image. That is, the collator 355 determines whether or not the inspection image is correct by determining whether or not the information included in the variable region of the read image matches information registered in advance. The information included in the variable region is information formed as an image in the variable region by the image former 330. The information formed as an image is, for example, an identifier such as a barcode or a QR code (registered trademark), and can be different for each page. For example, variable regions (VA4 to VA6) of pages 1 to 3 of the read image include barcodes different from each other as information formed as an image as illustrated in Fig. 4. For example, information obtained by encoding original information (referred to as first text information) registered in advance by a barcode or a QR code is printed in the variable region. Then, the collator 355 collates information (second text information) obtained by decoding the read image in the variable region with first text information. Note that in the collation process, text information obtained by OCR processing may be compared without decoding. For example, as in the example in Fig. 3, the text information (first text information such as English letters A, B, and C) printed in the variable region is collated with second text information obtained by the OCR processing on the read image of the first text information.

The collator 355 includes a collation controller 356. The collation controller 356 includes a CPU, a RAM, a ROM, and an auxiliary storage device (not illustrated). The function of collating an inspection image is implemented by the CPU executing an image inspection program. In response to an instruction from the controller 310, the collation controller 356 acquires the read image from the image reader 340, decodes the image in the variable region for each page (SI1 to SI3) of the read image, and converts the image into numerical data. The collator 355 compares, for each page, the converted numerical data with information (registration information) registered in advance for each page, and transmits a collation result to the controller 310. The registration information is stored in advance in the storage 318 of the controller 310 or a storage included in the collator 355 in association with the document image.

### <Configuration of operation display 360>

The operation display 360 includes a touch screen 361, an operation controller 362, a numeric keypad as hardware keys, a start button, a stop button, and the like. The touch screen includes, for example, a touch sensor and a liquid crystal display (LCD) disposed behind the touch sensor. The operation controller 362 receives input from the touch sensor and the hardware keys and transmits input data to the controller 310. Furthermore, the operation controller 362 receives output data from the controller 310 and displays the output data on the LCD. The operation display 360 is used for input of various settings (e.g., on/off of inspection setting, switching of inspection mode, and on/off of collation setting) and instructions (e.g., instruction to start printing) by the user. The operation display 360 is also used to output (display) the state of the image forming system 300, a result (non-defective product or defective product) of inspecting a printed product, a collation result (correct or not), an image of a defective printed product, and the like.

### <Configuration of sheet feeder 370>

The sheet feeder 370 includes at least one large-capacity sheet tray, and supplies sheets one by one to the image former 330.

### <Configuration of reference image generator 380>

The reference image generator 380 generates a reference image based on a document image acquired by the document image acquirer and outputs the reference image to the controller 310. More specifically, the reference image generator 380 generates a reference image for comparing an image of a page including a variable region and a non-variable region with a read image to be inspected by the image inspector 350. The reference image generator 380 acquires information regarding the inspection mode from the controller 310. The reference image generator 380 generates a reference image for each page based on the document image according to the inspection mode.

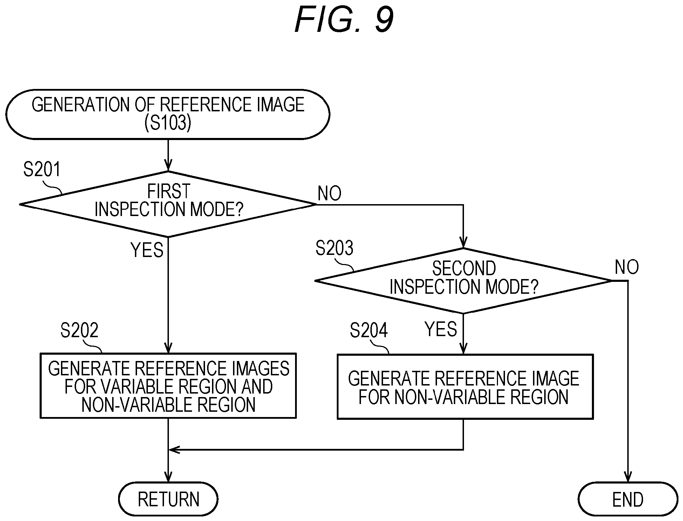

More specifically, when the first inspection mode is executed as the inspection mode, the reference image generator 380 generates, for each page, reference images for both the variable region and the non-variable region of the document image. On the other hand, when the second inspection mode is executed, the reference image generator 380 generates a reference image only for the non-variable region set as a region to be inspected of the document image. In this case, the reference image is not generated for the variable region set as the inspection exclusion region. In the second inspection mode, the reference image is not generated for all the pages of all the copies, and thus, the variable region cannot be accurately inspected. Therefore, inspection is not performed on the variable region set as the inspection exclusion region (see Fig. 9). Note that here, also in the second inspection mode, a reference image may be generated for the image in the variable region, and in the subsequent inspection mode, the variable region may be set as the inspection exclusion region by being masked.

The reference image generator 380 can be implemented by a CPU (not illustrated) executing the image inspection program. The CPU that executes the image inspection program is different from the image control CPU 311. Thus, the generation of the reference image and the formation and inspection of the inspection image are performed in parallel. Alternatively, in a case where the image control CPU 311 is a multi-core CPU, the reference image generator 380 may be assigned to a core different from a core for the processing of forming and inspecting the inspection image, and the generation of the reference image and the formation and inspection of the inspection image may be performed in parallel by the different cores.

Note that conventionally, the same CPU has been configured to perform the generation of a reference image and the formation and inspection of an inspection image. Therefore, the CPU performs the formation and inspection of the inspection image after completing the generation of the reference image for each page, so that the generation of the reference image and the formation and inspection of the inspection image cannot be performed in parallel. The present embodiment is configured such that the generation of the reference image and the formation and inspection of the inspection image are performed by the different CPUs, whereby the generation of the reference image and the formation and inspection of the inspection image can be performed in parallel.

In addition, in a case where the document image is complex, a calculation load for generating the reference image may significantly increase. The CPU different from the image control CPU 311 generates the reference image, whereby the calculation load on the image control CPU 311 can be reduced.

### <Configuration of storage device 390>

The storage device 390 stores the reference image generated by the reference image generator 380. When the document image is reprinted, the controller 310 uses the reference image stored in the storage device 390. This eliminates the need to generate the reference image again. Therefore, the time required for generating the reference image can be saved.

### <Outline of control operation of controller 310 and print controller 320>

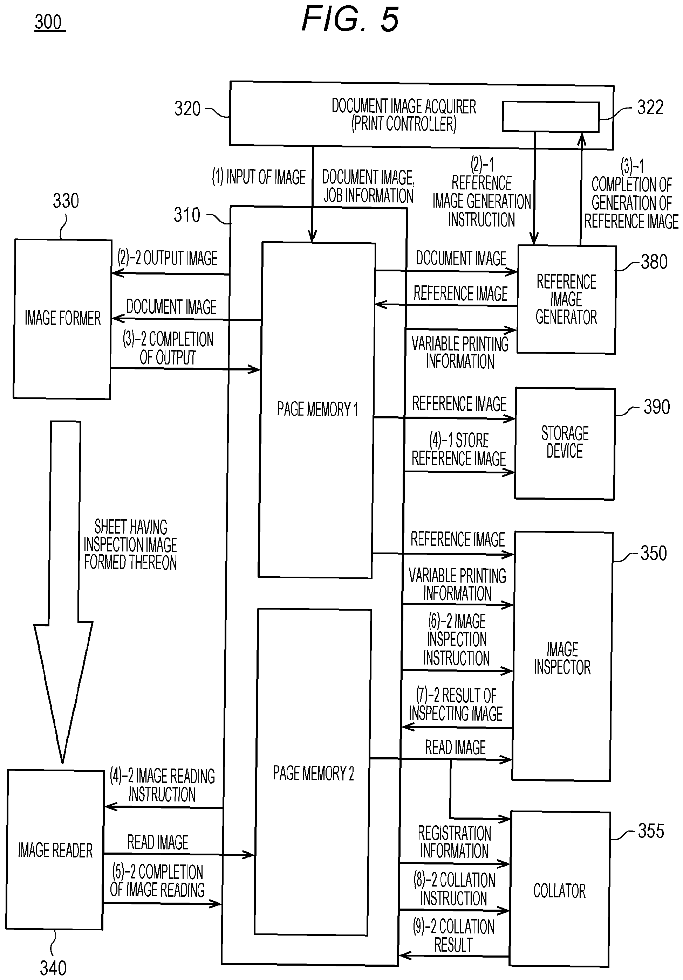

Fig. 5 is a block diagram for describing the outline of a control operation of the controller 310 and the print controller 320 illustrated in Fig. 2.

First, the controller 310 receives a document image and job information from the document image acquirer (print controller 320) ((1) input image). The document image is a RIP image obtained by rasterizing print data.

Upon receiving a reference image generation instruction from the reference image generation controller 322 ((2)-1 reference image generation instruction), the reference image generator 380 generates a reference image based on the document image acquired by the document image acquirer and outputs the reference image to the controller 310. The controller 310 stores the reference image in a page memory 1. As described above, when the first inspection mode is selected as the inspection mode, the reference image generator 380 generates reference images for both the variable region and the non-variable region based on the document image. In a case where the inspection mode is the second inspection mode, inspection of a variable region is not performed, and therefore, the reference image generator 380 does not generate a reference image for a variable region and generates a reference image composed of only a non-variable region.

The reference image generator 380 generates a reference image by performing various kinds of processing on the document image in terms of position, resolution, color, and the like. For example, in order that content portions (contents) of the reference image and the read image can be compared with each other, the reference image generator 380 can extract the position information of the content portion from the document image and add or embed the position information to or in the reference image. That is, the reference image generated by the reference image generator 380 includes alignment information for aligning the reference image and the read image when the image inspection is performed based on the reference image. Note that the alignment information includes outline information and edge information of the image. In addition, the reference image generated by the reference image generator 380 has region information regarding an inspection region and an inspection exclusion region used for the image inspection performed based on the reference image. Further, the reference image generator 380 can generate a reference image by adjusting the resolution of the document image so as to match the resolution of the scanner of the image reader 340. Furthermore, the reference image generator 380 can generate a reference image by converting the color space of the document image so as to match the color space (e.g., RGB) adopted by the scanner of the image reader 340.

**In** addition, upon receiving the document image from the document image acquirer, the controller 310 instructs the image former 330 to form an image and outputs the document image stored in the page memory 1 to the image former 330 ((2)-2 output image). **In** the present embodiment, the image former 330 forms an inspection image on a sheet based on the document image. **In** a case where the inspection mode is the first inspection mode, the generation of the reference image by the reference image generator 380 and the formation of the inspection image by the image former 330 are executed in parallel.

After completing the generation of the reference image, the reference image generator 380 gives a notification indicating that the generation of the reference image has been completed to the controller 310 and the reference image generation controller 322 ((3)-1 completion of generation of reference image). Furthermore, when completing the image formation on the sheet, the image former 330 gives a notification indicating the completion of output to the controller 310 ((3)-2 completion of output). The storage device 390 stores the generated reference image ((4)-1 store reference image).

Further, the controller 310 outputs an image reading instruction to the image reader 340 immediately after receiving the notification indicating the completion of the output ((4)-2 image reading instruction). The image reader 340 reads the sheet on which the inspection image is formed, and outputs the read image of the sheet to the controller 310. The controller 310 stores the read image in a page memory 2. When completing reading the sheet, the image reader 340 gives a notification indicating that the image reading has been completed ((5)-2 completion of image reading).

When the inspection setting is on, the controller 310 receives the notification indicating the completion of the image reading and outputs an image inspection instruction to the image inspector 350 ((6)-2 image inspection instruction). The image inspector 350 acquires the reference image and the read image from the page memory 1 and the page memory 2, respectively, and inspects the inspection image by comparing the reference image with the read image. Then, the image inspector 350 outputs the result of inspecting the inspection image to the controller 310 ((7)-2 result of inspecting image).

When the collation setting is on, the controller 310 receives the notification indicating the completion of the image reading and outputs a collation instruction to the collator 355 ((8)-2 collation instruction). The collator 355 acquires the read image from the page memory 2, and decodes information (e.g., a barcode image in Fig. 4) formed as an image in a variable region of the read image to convert the information into numerical data. Then, the collator 355 collates the inspection image by comparing the converted numerical data with the registration information of each page. Next, the collator 355 outputs a result of collating the information formed as an image to the controller 310 ((9)-2 collation result).

In response to an instruction from the user, the controller 310 performs control such that the result (indicating a non-defective product or a defective product) of inspecting the printed product is displayed on the operation display 360 or the display of the client terminal 200, on the basis of the result of inspecting the inspection image. In addition, in response to an instruction from the user, the controller 310 performs control such that the result of collating the inspection image is displayed on the operation display 360 or the display of the client terminal 200.

### <Image inspection method by image forming system 300>

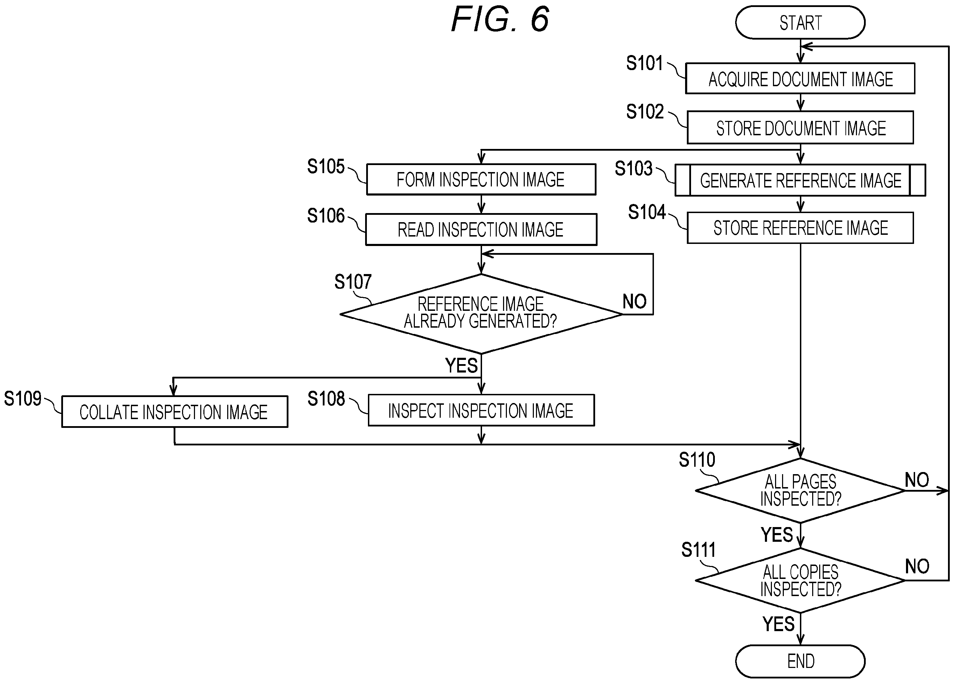

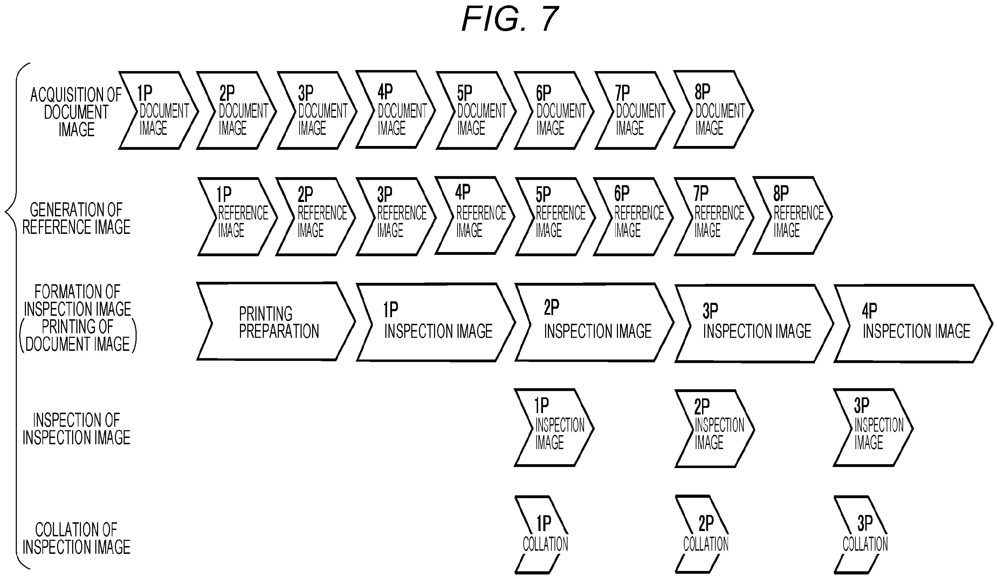

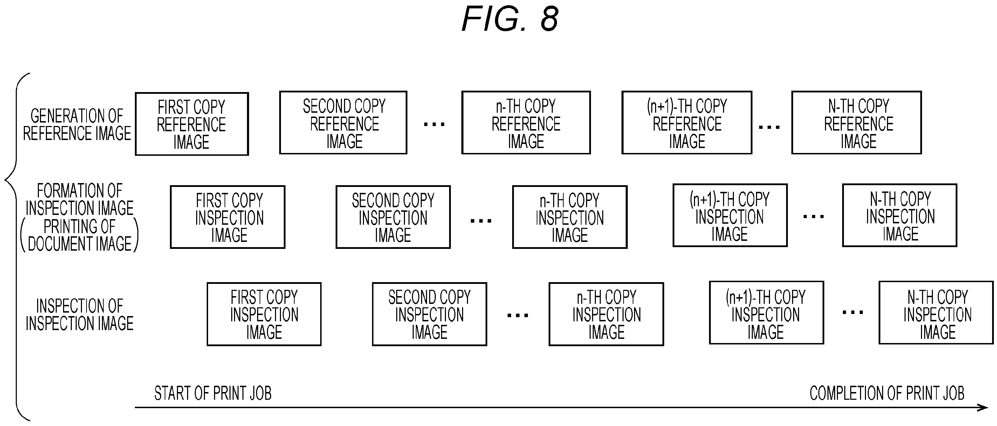

Fig. 6 is a flowchart illustrating a processing procedure of an image inspection method performed by the image forming system illustrated in Fig. 1; Each process illustrated in Fig. 6 is implemented by the image control CPU 311 executing an image inspection program. Further, Fig. 7 is a schematic diagram illustrating, in a time-series manner, processing of acquiring a document image, processing of generating a reference image, processing of forming an inspection image, processing of inspecting the inspection image, and processing of collating the inspection image. Fig. 8 is a schematic diagram illustrating printing of a plurality of copies of a document image in a time-series manner.

As illustrated in Fig. 6, first, the controller 310 acquires a document image (step S101). The document image includes one or a plurality of copies, and each copy can include one page or a plurality of pages. In a case where the document image includes a plurality of copies, for example, the controller 310 receives, for each copy from the first copy to the last N-th copy in order, the first page to the last m-th page of the document image (RIP image) from the document image acquirer page by page in order from the first page to the last m-th page. For example, Fig. 7 illustrates a case where the document image includes a plurality of copies and the first to eighth pages of the n-th copy are sequentially received. In Fig. 7, "1P" represents the first page (the same applies to "2P" and the like). In addition, "printing preparation" in the formation of an inspection image includes initial settings and preparation (for example, warm-up of a fixer) of each section according to an image forming condition in the image former 330.

Next, the controller 310 stores the document image (step S102). When a print job is started, the controller 310 stores the document image acquired from the document image acquirer in the page memory 1 on a page-by-page basis.

Next, when the inspection mode is the first inspection mode, the reference image generation controller 322 causes the reference image generator 380 to generate a reference image to be used for inspection of the inspection image. The reference image generator 380 generates a reference image in accordance with an instruction from the reference image generation controller 322 (step S103). For example, when the first page of the document image is acquired and stored in the page memory 1, the reference image generation controller 322 controls the reference image generator 380 so that the reference image generator 380 generates a reference image based on the first page of the document image. The reference image generator 380 generates a reference image based on the first page of the document image. A reference image is similarly generated for the second page of the document image.

In the present embodiment, when the inspection mode is the first inspection mode, the controller 310 controls the image former 330 so that the image former 330 forms an inspection image on a sheet based on the document image and the job information received from the document image acquirer, in parallel with the process of generating the reference image and the process of storing the reference image (steps S103 and S104). When the inspection mode is the second inspection mode, it is not necessary to perform generation and storage of the reference image, formation of the inspection image, and the like in parallel. The formation of the inspection image and the like may be performed with the reference image being generated in advance. Details of the processing procedure of generating the reference image will be described later.

Next, the storage device 390 stores the reference image generated by the reference image generator 380 (step S104). For example, the storage device 390 stores reference images based on the first page and the second page of the document image. For example, when the inspection mode is the first inspection mode, the controller 310 performs printing preparation and controls the image former 330 so that the image former 330 forms an inspection image on a sheet based on the first page of the document image. The image former 330 forms an inspection image based on the first page of the document image on a sheet in accordance with an instruction from the controller 310 (step S105). After the inspection image based on the first page of the document image is formed, an inspection image based on the second page of the document image is similarly formed on the sheet. In a case where the inspection image is formed by variable printing, the image formed on the sheet can include a non-variable region in which the same image is formed in a plurality of pages and a variable region in which a different image is formed for each page. For example, the image formed on the sheet can include a non-variable region having the same image for a plurality of pages of each copy for the same page (e.g., first page) and a variable region having different images for each copy.

Next, the image reader 340 reads the inspection image formed on the sheet (step S106).

Next, a reference image determiner (controller 310) determines whether or not a reference image has been generated for each page of the acquired document image (step S107). That is, the reference image determiner determines whether or not the reference image corresponding to the inspection image has been generated after the image formed on the sheet based on the inspection image is read. When the reference image has been generated (YES in step S107), the controller 310 causes the image inspector 350 to inspect the inspection image by comparing the reference image and the read image. The image inspector 350 inspects the inspection image in accordance with an instruction from the controller 310 (step S108). Furthermore, when the reference image has been generated (YES in step S107), the controller 310 causes the collator 355 to collate the inspection image in parallel with the inspection of the inspection image. The collator 355 collates the inspection image in accordance with an instruction from the controller 310 (step S109). The collator 355 collates the information formed as an image with the information obtained from the read image for the variable region. The process of collating inspection images is also referred to as a collation process. Note that the collation of the inspection image may be performed after or before the end of the inspection of the inspection image.

Then, the controller 310 repeats the processes of steps S101 to S109 until the inspection of the inspection images is completed for all the pages (from the first page to the last n-th page) (step S110).

Further, the controller 310 repeats printing up to the number of copies set in the job information (step S111). In the present embodiment, in a case where the set number of copies is, for example, N, the reference image generator 380 generates a reference image N times until printing is completed, as illustrated in Fig. 8. That is, the reference image generator 380 performs processing of generating a reference image for each copy of the same page, thereby generating, for each of the copies, a reference image to be used for inspection of the inspection image formed on each of sheets of the plurality of copies by the image former 330.

As described above, in the present embodiment, the controller 310 can perform control such that the generation of a reference image and the formation of an inspection image are performed in parallel. When the number of copies is two or more, the controller 310 can perform control such that the generation of a reference image and the formation of an image on a sheet are performed in parallel for each of the copies. For example, the controller 310 performs control such that the generation of a reference image and the formation of an inspection image are performed in parallel for the first copy of a plurality of copies.

Further, a process of generating a reference image is referred to as a reference image generation process, and a process including formation of an inspection image on a sheet and inspection of a read image generated by reading the sheet on which the inspection image has been formed is referred to as an inspection process. The controller 310 can perform control such that the reference image generation process and the inspection process are performed in parallel for the n-th copy among the plurality of copies. For example, the controller 310 performs control such that the reference image generation process and the inspection process are performed in parallel for the first copy among the plurality of copies.

Furthermore, the controller 310 can perform control such that the generation of the reference image for the (n+1)-th copy among the plurality of copies is performed in parallel with the inspection of a sheet of the n-th copy among the plurality of copies. For example, the controller 310 performs control such that the generation of the reference image for the second copy among the plurality of copies is performed in parallel with the inspection of a sheet of the first copy among the plurality of copies.

On the other hand, when a reference image has not been generated (NO in step S107), the image inspector 350 waits until a reference image is generated. For example, in a case where the reference image for the same document image (first page) as the document image (first page) serving as the source of the inspection image to be inspected in step S108 has not been generated, the image inspector 350 waits until the reference image for the document image (first page) is generated.

As illustrated in Fig. 7, the generation of the reference image by the reference image generator 380 and the formation, inspection, and collation of the inspection image are performed in parallel. Thus, the image forming system 300 can further shorten the time required for the processing from the generation of the reference image to the inspection and collation of the inspection image as compared with the conventional technology.

### [Generation of reference image and formation of inspection image on sheet to be performed in parallel]

For example, in the example illustrated in Fig. 7, the generation of the reference images based on the first page (1P) and the second page (2P) and the printing preparation are executed in parallel, and the generation of the reference images based on the third page (3P) and the fourth page (4P) and the formation (first half) of the inspection image based on the first page (1P) are executed in parallel. Note that, although the generation of the reference image based on the third page (3P) and the formation of the inspection image based on the first page (1P) are illustrated as being started at the same time in Fig. 7, it is not limited thereto. The formation of the inspection image based on the first page (1P) can be started at an appropriate timing after the completion of the printing preparation, and the generation of the reference image based on the third page (3P) can be started at an appropriate timing after the generation of the reference image based on the second page (2P). The generation of a reference image and the generation of an inspection image for each of the subsequent pages are started in a similar manner to those described above.

### [Generation of reference image, formation of inspection image on sheet, and inspection and collation of inspection image to be performed in parallel]

Thereafter, the generation of the reference image based on the fifth page (5P), the formation of the inspection image based on the second page (2P), and the inspection and collation of the inspection image based on the first page are executed in parallel.

As described above, in the present embodiment, while a reference image is generated upon receipt of the document image (the generation of the reference image is triggered by the reception of the document image), an inspection image is formed on a sheet and is inspected and collated when the printing preparation is completed. In the present embodiment, the generation of the reference image is performed in parallel with the formation of the inspection image and inspection and collation of the inspection image, whereby it is possible to shorten the time required for the processing from the generation of the reference image to the inspection and collation of the inspection image. As a result, the productivity of a printed product is improved.

### <Print job>

As described above, the image forming system 300 receives a print job, and generates a reference image and forms an inspection image in parallel in a case where the inspection setting of job information is on. The controller 310 and the print controller 320 perform control such that the generation of the reference image by the reference image generator 380 and the formation of the inspection image by the image former 330 are performed in parallel in one (same) print job.

On the other hand, the image forming system 300 may perform the generation of the reference image and the formation and inspection of the inspection image according to separate print jobs. The controller 310 and the print controller 320 perform control so that the reference image generation process (reference image generation job) and the inspection process (inspection job) are performed in parallel. Here, the reference image generation process includes generating a reference image by the reference image generator 380. The inspection process includes forming an inspection image on a sheet by the image former 330, inspecting, by the image inspector 350, a read image generated by reading the sheet on which the inspection image has been formed, and collating the read image by the collator 355. For example, the reference image generation process can be performed by a CPU different from the image control CPU 311, and the inspection process can be performed by the image control CPU 311. Alternatively, when the controller 310 includes a multi-core CPU, the reference image generation process and the inspection process may be assigned to different cores, and may be performed in parallel by these cores.

### <Processing of generating reference image (step S103)>

Fig. 9 is a subroutine flowchart illustrating processing (step S103) of generating the reference image in the flowchart illustrated in Fig. 6.

First, the reference image generator 380 determines whether or not the inspection mode is the first inspection mode (step S201). When the inspection mode is the first inspection mode (YES in step S201), the reference image generator 380 generates reference images for a variable region and a non-variable region (step S202). After generating the reference images, the reference image generator 380 ends the processing (RETURN).

On the other hand, when the inspection mode is not the first inspection mode (NO in step S201), the reference image generator 380 determines whether or not the inspection mode is the second inspection mode (step S203). When the inspection mode is the second inspection mode (YES in step S203), the reference image generator 380 generates a reference image for a non-variable region (step S204). More specifically, the reference image generator 380 generates a reference image corresponding to the non-variable region, that is, the region outside the variable region. After generating the reference image for the non-variable region, the reference image generator 380 ends the processing of generating a reference image (RETURN).

On the other hand, when the inspection mode is not the second inspection mode (NO in step S203), the reference image generator 380 ends the processing of generating a reference image (image inspection) (END).

As described above, in the processes of the flowchart illustrated in Fig. 6 and the subroutine flowchart illustrated in Fig. 9, when the inspection mode is the first inspection mode, the reference image generator 380 generates reference images for the variable region and the non-variable region in each page of each of copies, that is, the entire region of the print page, and inspects the inspection image. Furthermore, when the inspection mode is the second inspection mode, the reference image generator 380 generates a reference image for the non-variable region in each page of each of copies, and inspects the inspection image for the non-variable region.

The image inspection apparatus, the image inspection method, and the image inspection program according to the embodiment described above can provide the following effects.

A reference image for comparison with the read image to be inspected is generated for the image of the page including the variable region and the non-variable region, whereby it is possible to inspect not only the non-variable region but also the variable region. Therefore, an image defect can be detected not only in the non-variable region but also in the variable region.

Further, since the image in the non-variable region is the same for all copies of the document image, it is only sufficient that only one reference image common to all copies is generated. On the other hand, since the image in the variable region is different for each copy, it is necessary to generate a different reference image for each copy.

As described above, the image inspection apparatus, the image inspection method, and the image inspection program have been described in the embodiment. However, it is obvious that those skilled in the art can appropriately make addition, modifications, and omissions with respect to the present invention within the scope of the technical idea thereof.

For example, although the above embodiment has described the case of generating a document image based on a print job, the present invention is not limited to such a case. The image former 330 may include an image reading device 333 (see Fig. 1) that reads a document prepared by a user, and may be configured to generate a document image based on an image generated by reading the document by the image reading device 333. The image reading device 333 reads, for example, a document conveyed to a predetermined reading position by an automatic document feeder using a scanner, and generates image data.

Furthermore, the image inspection program may be provided by a computer-readable recording medium, such as a USB memory, a flexible disk, or a CD-ROM, or may be provided online via a network, such as the Internet. In this case, the image inspection program recorded on the computer-readable recording medium is usually transferred to and stored in a memory, a storage, or the like. Alternatively, the image inspection program may be provided, for example, as independent application software, or may be incorporated into software of each device as a function of a server.

Furthermore, a part or a whole of the processing performed by the image inspection program in the embodiment can be performed in the form of hardware such as circuits.

Although embodiments of the present invention have been described and illustrated in detail, the disclosed embodiments are made for purposes of illustration and example only and not limitation. The scope of the present invention should be interpreted by terms of the appended claims.

### Reference Signs List

100 Printing system
200 Client terminal
300 Image forming system
310 Controller
311 Image control CPU
312 DRAM control IC
313 Memory
314 Image memory (DRAM)
315 Compression/decompression IC
316 Reading processor
317 Writing processor
318 Storage
320 Print controller
321 Controller control section
322 Reference image generation controller
323 DRAM control IC
324 Image memory (DRAM)
325 Communication controller
326 Communication I/F
330 Image former
331 Printer controller
332 Exposure section
333 Image reading device
340 Image reader
341 Scanner
342 Scanner controller
350 Image inspector
351 Image inspection controller
355 Collator
356 Collation controller
360 Operation display
361 LCD/touch sensor
362 Operation controller
370 Sheet feeder
380 Reference image generator
390 Storage device
400 Communication line

## Claims

1. An image inspection apparatus comprising:
an image former (330) that forms an image on a recording medium based on image data;
a reference image generator (380) that generates, based on the image data, a reference image to be used for inspection of the image formed on the recording medium; and
an image inspector (350) that performs inspection of the image formed on the recording medium based on the reference image,
wherein the reference image generator (380) generates a reference image to be compared to a read image that is to be inspected by the image inspector (350) for an image of a page including a non-variable region in which same image is formed in a plurality of pages by the image former (330) and a variable region in which different images are formed for each page.

2. The image inspection apparatus according to claim 1, wherein the reference image generator (380) generates the reference image for each page.

3. The image inspection apparatus according to claim 1 or 2, wherein the image inspector (350) performs the same type of inspection for the variable region and the non-variable region included in the image.

4. The image inspection apparatus according to claim 1 or 2, further comprising a controller (351) that controls execution of a first inspection mode in which the image inspector (350) performs the inspection for the variable region and execution of a second inspection mode in which the image inspector (350) does not perform the inspection for the variable region, wherein the controller (351) causes the reference image generator (380) to generate the reference image for an image in the non-variable region, causes the reference image generator (380) to generate the reference image for an image in the variable region when the first inspection mode is executed, and causes the reference image generator (380) not to generate the reference image for an image in the variable region when the second inspection mode is executed.

5. The image inspection apparatus according to claim 1 or 2, further comprising a collator (355) that performs collation by comparing information formed as an image and information obtained from a read image for the variable region, wherein the inspection by the image inspector (350) and the collation by the collator (355) are performed for the variable region.

6. The image inspection apparatus according to claim 5, wherein, for the variable region, an inspection process by the image inspector (350) and a collation process by the collator (355) are performed in parallel.

7. The image inspection apparatus according to claim 1 or 2, further comprising a controller (310, 320) that performs, in parallel, a reference image generation process including generating the reference image by the reference image generator (380), and an inspection process including forming the image on the recording medium by the image former (330) and inspecting, by the image inspector (350), a read image generated by reading the recording medium on which the image has been formed.

8. An image inspection method comprising:
a step (a) of forming an image on a recording medium based on image data;
a step (b) of generating, based on the image data, a reference image to be used for inspection of the image formed on the recording medium; and
a step (c) of inspecting the image formed on the recording medium based on the reference image,
wherein the step (b) includes generating a reference image to be compared to a read image that is to be inspected in the step (c) for an image of a page including a non-variable region in which same image is formed in a plurality of pages in the step (a) and a variable region in which different images are formed for each page.

9. An image inspection program for causing a computer to execute processing comprising:
a procedure (a) of forming an image on a recording medium based on image data;
a procedure (b) of generating, based on the image data, a reference image to be used for inspection of the image formed on the recording medium; and
a procedure (c) of inspecting the image formed on the recording medium based on the reference image,
wherein the procedure (b) includes generating a reference image to be compared to a read image that is to be inspected in the procedure (c) for an image of a page including a non-variable region in which same image is formed in a plurality of pages in the procedure (a) and a variable region in which different images are formed for each page.
